# EUROPÄISCHE PATENTSCHRIFT

(11) **EP 2 720 788 B1**
(45) Veröffentlichungstag und Bekanntmachung des Hinweises auf die Patenterteilung: **14.07.2021**
(21) Anmeldenummer: 12723664.4
(22) Anmeldetag: 24.05.2012
(51) Int. Cl.: B01J 19/08, C01B 3/24, C10G 15/12, C10L 3/10

(54) **VERFAHREN ZUR MODIFIZIERUNG EINES METHANHALTIGEN GASVOLUMENSTROMS**
METHOD FOR MODIFYING A METHANE-CONTAINING GAS STREAM
PROCÉDÉ DE MODIFICATION D'UN FLUX GAZEUX CONTENANT DU MÉTHANE

(30) Priorität: 20.06.2011 DE 102011077788
(43) Veröffentlichungstag der Anmeldung: 23.04.2014
(73) Patentinhaber: Evonik Operations GmbH, 45128 Essen (DE)
(72) Erfinder: MARKOWZ, Georg, 63755 Alzenau (DE); LANG, Jürgen Erwin, 76229 Karlsruhe (DE); SCHÜTTE, Rüdiger, 63755 Alzenau-Hörstein (DE)
(74) Vertreter: Evonik Patent Association
(86) Internationale Anmeldenummer: PCT/EP2012/059698
(87) Internationale Veröffentlichungsnummer: WO 2012/175279

(56) Entgegenhaltungen:
- EP-A1- 2 169 035
- US-A1- 2004 157 940
- "HYDROGEN-ENRICHED NATURAL GAS", , 1. Januar 2009 (2009-01-01), XP55034893, Gefunden im Internet: URL:http://www.worldenergy.org/documents/c ongresspapers/225.pdf [gefunden am 2012-08-07]
- "Teil 3: Wasserstoff-Speicher", ENERGIE Perspektiven, 1. Januar 2008 (2008-01-01), XP55034907, Gefunden im Internet: URL:http://web.archive.org/web/20090803175 953/http://www.ipp.mpg.de/ippcms/ep/downlo ad/2008/ep_2008_02.pdf [gefunden am 2012-08-07]

## Beschreibung

Die vorliegende Erfindung betrifft ein Verfahren zur Modifizierung eines methanhaltigen Gasvolumenstroms.

Der Ausbau der Erneuerbaren Energien (EE) mit fluktuierenden und nur ineffizient steuerbaren Erzeugungsprofilen stellt zunehmende Herausforderungen an die Energieinfrastrukturen. Neben dem Netzausbau und Ansätzen zum Lastmanagement wird die Bereitstellung geeigneter Speicherkapazitäten gefordert. Dabei kommen sowohl hochdynamische Speicher zur Stabilisierung der Stromnetze wie auch Technologien zur Aufnahme großer Überschüsse aus EE in Betracht. Im letztgenannten Fall werden derzeit neben den etablierten Pumpspeicherwerken vor allem Druckluftspeicherwerke und die chemische Speicherung in Form von Wasserstoff in Betracht gezogen und in Forschung und Entwicklung verfolgt. Im Fall des Wasserstoffs besteht neben dem Bedarf zur drastischen Senkung von Investitionskosten bzgl. der Komponenten und zur Effizienzsteigerung in den Umwandlungsschritten die Frage nach einer geeigneten Infrastruktur zur Lagerung, Verteilung und Nutzung des Wasserstoffs.

In den vergangenen Jahren hat es zahlreiche Ansätze gegeben für eine Wasserstoffinfrastruktur. Zu unterscheiden sind die Ansätze, bei denen Wasserstoff separat gelagert, transportiert und verwertet wird. Nachteilig ist hier der beträchtliche Aufwand zur Einführung einer separaten Infrastruktur. Vor allem das Beispiel der Wasserstoff-Mobilität zeigt, dass es nicht unerhebliche Hürden bei der Einführung gibt, wenn solche Konzepte auf einer flächendeckenden Verfügbarkeit des Energieträgers basieren. Auch die oft favorisierte Nutzung von zentralen Erdkavernenlagern für die Speicherung von Wasserstoff bedeutet durch die hohe Anfangsinvestition einen beträchtliche Einstiegshürde. Nicht zuletzt wäre es erforderlich, dass die Nutzer neue Gerätschaften installieren.

Folgerichtig haben sich viele Arbeiten mit der Nutzung der bestehenden Erdgasinfrastrukturen zur Speicherung und zum Transport von regenerativ erzeugtem Wasserstoff befasst. Im Rahmen des EU-geförderten Projekts NaturalHy wurde die technische und insbesondere sicherheitstechnische Machbarkeit der Einspeisung von Wasserstoff in Erdgasleitungen untersucht und nachgewiesen. Höhere und vor allem fluktuierende Anteile an Wasserstoff im Erdgas führen allerdings zu Problemen bei den Endgeräten, da viele Endgeräte nur ein vergleichsweise enges Band beim sogenannten Wobbe-Index erlauben und eine Aufweitung des Bandes aufwendige Zusatzinstallationen an den Endgeräten verursachen würden. Der Wobbe-Index eines brennbaren Gases nach DIN 51857 berechnet sich aus dem Heizwert und der relativen Dichte des Gases und beschreibt die bei der Verbrennung des Gases in einem Düsenbrenner erzielte Heizleistung. In den Niederlanden beispielsweise muss der Wobbe-Index in einem Band von ca. 1 MJ/m³ gehalten werden. Die Zugabe von Wasserstoff führt aber bereits bei niedrigen Anteilen von ca. 5 Vol-% zu einem Verlassen des Bandes. Eine unmittelbare Einspeisung von Wasserstoff in herkömmliche Gasnetze, die beispielsweise zur Verteilung von Erdgas eingesetzt werden, ist deshalb nur in geringem Umfang möglich.

Eine alternative Möglichkeit zur zweckmäßigen Verwendung von größeren Mengen Strom, die aus EE stammen, stellt die Umwandlung von Wasserstoff und Kohlenmonoxid bzw. Kohlendioxid in Methan dar, die nachfolgend auch als Methanisierung bezeichnet wird. In diesem Fall gibt es prinzipiell keine Beschränkung hinsichtlich der Menge an eingespeistem Strom. Andererseits ist zu beachten, dass die Methanisierung zusätzlich zur Wasserstofferzeugung einen beträchtlichen apparativen Aufwand erfordert und weitere Energieverluste mit sich bringt. So erfolgt die Methanisierung in einem Gasphasenprozess bei etwa 200 bis 300 °C unter Überdruck. Die Reaktion ist gleichgewichtslimitiert, so dass eine mehr oder weniger umfangreiche Aufarbeitung und Kreisführung der Prozessgase erforderlich ist. Weiterhin ist die Reaktion stark exotherm. Die Reaktionswärme kann - insbesondere bei größeren Anlagen - in der Regel nicht oder nur teilweise genutzt werden. Damit reduziert sich der ohnehin bereits niedrige Wirkungsgrad in der gesamten Wandlungskette weiter. HYDROGEN-ENRICHED NATURAL GAS", Januar 2009 (2009-01-01), XP055034893 offenbart ein Verfahren zur Anreicherung von Erdgas mit Wasserstoff mittels "off-peak" elektrischer Energie.

In Anbetracht des Standes der Technik ist es nun Aufgabe der vorliegenden Erfindung ein technisch verbessertes Verfahren zur Verwendung, insbesondere zur Speicherung oder zweckmäßigen Verwendung von elektrischer Energie bereitzustellen, das nicht mit den Nachteilen herkömmlicher Verfahren behaftet ist.

So soll durch das erfindungsgemäße Verfahren elektrische Energie, insbesondere überschüssige erneuerbare Energie, mittels eines geeigneten Verfahrens in eine speicherbare Form überführt werden.

Insbesondere ist es eine Aufgabe der vorliegenden Erfindung, Wege zu finden, die es ermöglichen, den apparativen und betrieblichen Aufwand zu Speicherung, Transport und Nutzung von bevorzugt regenerativ erzeugtem Wasserstoff gegenüber dem Stand der Technik zu reduzieren.

Weiterhin soll das Verfahren skalierbar durchgeführt werden können, so dass relativ kleine Anlagen, die auch modular aufgebaut sein können, zur Durchführung der Speicherung eingesetzt werden können. Ferner sollte ein dezentraler Betrieb der Anlagen möglich sein.

Das Verfahren soll weiterhin einen möglichst hohen Wirkungsgrad besitzen. Weiterhin soll das erfindungsgemäße Verfahren unter Verwendung der herkömmlichen und weithin vorhandenen Infrastruktur durchgeführt werden können.

Des Weiteren sollen durch das erfindungsgemäße Verfahren wertvolle Chemikalien, die bei dem Verfahren als zusätzliche Nebenprodukte anfallen, zur Verfügung gestellt werden können.

Weiterhin soll das Verfahren möglichst einfach und kostengünstig durchgeführt werden können.

Darüber hinaus soll das Verfahren mit möglichst wenigen Verfahrensschritten durchgeführt werden können, wobei dieselben einfach und reproduzierbar sein sollten.

Weiterhin soll die Durchführung des Verfahrens nicht mit einer Gefährdung der Umwelt oder der Gesundheit von Menschen verbunden sein, so dass auf den Einsatz von gesundheitlich bedenklichen Stoffen oder Verbindungen, die mit Nachteilen für die Umwelt verbunden sein könnten, im Wesentlichen verzichtet werden können sollte.

Weiterhin soll sich das Verfahren unabhängig von der vorhandenen Erdgasqualität einsetzen lassen.

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren, bei dem ein Teilstrom eines methanhaltigen Gasvolumenstroms mit einem Plasma behandelt wird, sodass ein Teil des Methans zu Wasserstoff und höheren Kohlenwasserstoffen umgesetzt wird und der behandelte Teilstrom einen höheren Brennwert als der methanhaltige Gasvolumenstrom erhält.

Gegenstand der vorliegenden Erfindung ist dementsprechend ein Verfahren zur Modifizierung eines methanhaltigen Gasvolumenstroms, umfassend die Schritte:
i) Entnahme eines Teilvolumenstroms aus einem methanhaltigen Gasvolumenstrom,
ii) Behandlung des Teilvolumenstroms mit einem elektrisch erzeugten Plasma unter Erzeugung einer modifizierten Gaszusammensetzung, die einen geringeren Anteil an Methan umfasst als der methanhaltige Gasvolumenstroms und
iii) Rückführung von modifizierter Gaszusammensetzung in den methanhaltigen Gasvolumenstrom.

Hierdurch gelingt es auf überraschende und nicht vorhersehbare Weise ein Verfahren der zuvor dargelegten Gattung bereitzustellen, welches ein besonders gutes Eigenschaftsprofil aufweist und das insbesondere nicht mit den Nachteilen herkömmlicher Verfahren behaftet ist.

Unter einem methanhaltigen Gasvolumenstrom versteht man gemäß der vorliegenden Erfindung einen Gasvolumenstrom, der neben Methan auch andere gasförmige Verbindungen umfassen kann. Der eingesetzte methanhaltige Gasvolumenstrom weist vorzugsweise einen Anteil an Methan von mindestens 50Vol.-%, besonders bevorzugt mindestens 60 Vol.-% und insbesondere mindestens 80 Vol.-% auf. Vorzugsweise ist der methanhaltige Gasvolumenstrom ein Erdgas, ein Stadtgas oder ein Biogas, besonders bevorzugt ein Erdgas. Besonders bevorzugt ist der methanhaltige Gasvolumenstrom ein Erdgas, das durch eine Pipeline oder eine Erdgasverteilungsleitung strömt.

Im erfindungsgemäßen Verfahren werden vorzugsweise höchstens 80 %, besonders bevorzugt höchstens 60 % und insbesondere höchstens 40 % des methanhaltigen Gasvolumenstroms als Teilvolumenstrom entnommen.

Der entnommene Teilvolumenstrom kann vor der Behandlung mit einem Plasma gelagert, gespeichert, insbesondere zwischengespeichert, umgeleitet und/oder vorbehandelt werden.

Der entnommene Teilvolumenstrom wird im erfindungsgemäßen Verfahren mit einem elektrisch erzeugten Plasma behandelt. Der Begriff elektrisch erzeugtes Plasma bezeichnet erfindungsgemäß eine elektrisch oder elektromagnetisch erzeugte Gasentladung. Das elektrisch erzeugte Plasma kann eine Glimmentladung sein, die weit entfernt vom thermischen Gleichgewicht erfolgt (Nichtgleichgewichtsplasma mit hoher Elektronentemmperatur), oder eine Gasentladung, die näher am thermischen Gleichgewicht liegt (quasi isothermes Plasma). Methoden zur Plasmaerzeugung sind dem Fachmann aus Rutscher/Deutsch: Plasmatechnik - Grundlagen und Anwendungen - Eine Einführung, Lizenzausgabe für den Carl Hanser Verlag München Wien, VEB Fachbuchverlag Leipzig, 1984, Kapitel 1.2 "Erzeugung des Plasmazustandes", Seiten 46 bis 58 bekannt.

Die Plasmabehandlung kann prinzipiell bei einem beliebigen Druck vorgenommen werden. Für die Behandlung kann der Druck im entnommenen Teilvolumenstrom reduziert werden. Bevorzugt wird das Verfahren jedoch bei einem Druck durchgeführt, der nur wenig von dem Druck des methanhaltigen Gasvolumenstroms abweicht, so dass keine aufwendige Druckanpassung oder Verdichtung für die Rückführung erforderlich wird.

Vorzugsweise wird das Plasma mit einer dielektrischen Barriereentladung (Dielectric Barrier Discharge, DBD) erzeugt. Vorrichtungen zur Erzeugung einer dielektrischen Barriereentladung in einem Gasstrom sind dem Fachmann bekannt und kommerziell erhältlich, beispielsweise zur Herstellung von Ozon aus Sauerstoff. Die Erzeugung einer dielektrischen Barriereentladung in Methan unter Bildung von Ethan ist in Beitr. Plasmaphys. 23 (1983) 181-191 beschrieben. Die Behandlung mit einem mit einer dielektrischen Barriereentladung erzeugten Plasma wird vorzugsweise bei einem Druck von weniger als 50 bar, besonders bevorzugt weniger als 10 bar und insbesondere weniger als 1,2 bar durchgeführt. Die dielektrische Barriereentladung kann mit Wechselspannung niederer Frequenz, beispielsweise mit der Netzfrequenz von 50 Hz, betrieben werden. Zur Erhöhung des Durchsatzes kann bei höheren Frequenzen bis 100 GHz gearbeitet werden. Vorzugsweise wird in den technisceh üblichen Frequenzbereichen um 13 MHz, 900 MHz oder 2,4 GHz gearbeitet.

Geometrie und Betriebsbedingungen der dielektrischen Barriereentladung werden vorzugsweise so gewählt, dass das Produkt zwischen der Spaltbreite des Gasraums zwischen den Elektroden und dem Gasdruck im Bereich von 0,75*10⁻³ bis 7,5*10³ mm*bar liegt.

In einer alternativen bevorzugten Ausführungsform wird das Plasma durch eine Bogenentladung erzeugt. Vorrichtungen zur Erzeugung einer Bogenentladung in einem Gasstrom sind dem Fachmann von Herstellverfahren für Acetylen bekannt und in Ullmann's Encyclopedia of Industrial Chemistry, 5. Auflage, Vol. A1, 115-116 und Vol. A20, 428-434 beschrieben. Die Bogenentladung kann mit Gleichstrom oder Wechselstrom betrieben werden. Im erfindungsgemäßen Verfahren wird der durch die Gasentladung gebildete Bogen vorzugsweise mit mindestens einem Teil des Teilvolumenstroms angeblasen. Im erfindungsgemäßen Verfahren werden die Geschwindigkeit des Teilvolumenstroms und der Energieeintrag durch die Bogenentladung vorzugsweise so gewählt, dass sich ein wesentlich geringerer massenbezogener Energieeintrag als bei den bekannten Verfahren zur Herstellung von Acetylen ergibt. In einer bevorzugten Ausführungsform wird ein Teil des Teilvolumenstroms durch eine Bogenentladung geführt und das dabei resultierende heiße Gas unmittelbar anschließend durch Mischen mit dem Rest des Teilvolumenstroms chemisch und thermisch gequencht. In einer weiteren bevorzugten Ausführungsform wird durch eine Bogenentladung in einem Wasserstoffstrom ein Plasma erzeugt und der Teilvolumenstrom mit dem so erzeugten Plasma behandelt. Für die Erzeugung der Bogenentladung in dem Wasserstoffstrom wird vorzugsweise ein Plasmabrenner eingesetzt und der damit erzeugte Wasserstoffplasmastrahl in den Teilvolumenstrom gelenkt.

In einer weiteren Ausführungsform kann an Stelle einer Bogenentladung das Plasma auch durch eine Funkenentladung, eine Radiofrequenzentladung oder eine Hochfrequenzentladung, z.B. eine Mikrowellenentladung erzeugt werden.

Der Teilvolumenstrom kann auch mehrfach mit einem elektrisch erzeugten Plasma behandelt werden, wobei auch dielektrische Barriereentladungen, Bogenentladungen, Funkenentladungen, Radiofrequenzentladungen und Hochfrequenzentladungen miteinander kombiniert werden können.

Bei der Plasmabehandlung erfolgt eine Umsetzung von Methan zu höheren Kohlenwasserstoffen und Wasserstoff, insbesondere zu Ethan und Wasserstoff entsprechend der Reaktionsgleichung:

2 CH₄ → C₂H₆ + H₂

Die durch die Plasmabehandlung modifizierte Gaszusammensetzung weist deshalb vorzugsweise einen höheren Gehalt an Wasserstoff und Ethan auf als der entnommene Teilvolumenstrom. Neben Ethan können auch höhere Kohlenwasserstoffe, wie Propan und Butan, erhalten werden. In Abhängigkeit von den Verfahrensbedingungen der Plasmabehandlung des Teilvolumenstroms, insbesondere bei höherem Energieeintrag und hohen Plasmatemperaturen, können zusätzlich auch ungesättigte Kohlenwasserstoffe, wie Ethen, Propen und Acetylen, sowie Ruß gebildet werden. Die durch die Plasmabehandlung modifizierte Gaszusammensetzung weist deshalb besonders bevorzugt auch einen höheren Gehalt an Propan, Ethen und/oder Propen auf als der entnommene Teilvolumenstrom. Wenn der methanhaltige Gasvolumenstrom Sauerstoff, Wasser oder Kohlendioxid enthält, kann die durch die Plasmabehandlung modifizierte Gaszusammensetzung außerdem einen erhöhten Anteil an Kohlenmonoxid enthalten.

Die zur Erzeugung des Plasmas eingesetzte elektrische Energie kann dynamisch gemäß dem Angebot an elektrischer Energie angepasst werden. Vorzugsweise stammt die elektrische Energie aus überschüssigem Strom, der besonders bevorzugt aus erneuerbaren Energien gewonnen wurde. Mit dem erfindungsgemäßen Verfahren kann ein Überangebot an Strom, der aus Gründen der Belastbarkeit des Stromnetzes oder des zur Zeit der Einspeisung zu geringen Strombedarfs nicht in das Stromnetz eingespeist werden kann, zweckmäßig in Form von chemischer Energie gespeichert werden. Vorzugsweise wird die erfindungsgemäße Plasmabehandlung regelbar ausgestaltet, wobei die Regelung insbesondere in Abhängigkeit des Stromangebots erfolgen kann.

Je nach bereitstehender Energie und Größe des entnommenen Teilvolumenstroms kann die Zusammensetzung der modifizierten Gaszusammensetzung stark schwanken, wobei der Methangehalt, bezogen auf das eingesetzte methanhaltige Gas abnimmt. Weiterhin kann die Höhe des methanhaltigen Gasvolumenstroms schwanken, so dass sich nach Rückführung der modifizierten Gaszusammensetzung in den methanhaltigen Gasvolumenstrom Schwankungen in dessen Zusammensetzung ergeben. Im Allgemeinen werden demgemäß Durchschnittswerte erhalten, wobei der Umsatz vielfach relativ gering gewählt werden kann, ohne dass die Anlage unwirtschaftlich wird. Gemäß einer besonderen Ausgestaltung kann über ein Jahr betrachtet der Anteil an Methan in der modifizierten Gaszusammensetzung mindestens 20 Vol.-%, bevorzugt mindestens 40 Vol.-% und besonders bevorzugt mindestens 60 Vol.-% betragen. Der Zunahme des Gehalts an höheren Kohlenwasserstoffen in der modifizierten Gaszusammensetzung kann beispielsweise im Bereich von 0,01 bis 40 Vol.-%, bevorzugt 1 bis 30 Vol.-% und besonders bevorzugt 5 bis 20 Vol.-% betragen. Diese Werte gelten vor einer Einstellung des Wobbe-Indexes auf einen vorgegebenen Wert, wobei diese Angaben einen Mittelwert darstellt, der über ein Jahr zu bestimmen ist.

Es kann ferner vorgesehen sein, dass die Plasmabehandlung in Abhängigkeit von den gewünschten Zielwerten beim Wobbe-Index den chemischen Umsatz des Methans weiter in Richtung der nächst höheren Kohlenwasserstoffe treibt. Hierbei kann der Umsatz des Methans insbesondere in Abhängigkeit der stark fluktuierenden elektrischen Energie gesteuert werden, so dass bei einem hohen Angebot an erneuerbaren Energien mehr Methan und bei geringem Angebot wenig Methan umgesetzt wird.

Wenn sich in der Vorrichtung, in der die Plasmabehandlung durchgeführt wird, Ablagerungen, zum Beispiel durch Ruß oder Teer, bilden, lassen sich diese entfernen, indem in der Vorrichtung ein Plasma in einem sauerstoffhaltigen Gas, zum Beispiel Luft, erzeugt wird. Vorzugsweise wird dazu die Behandlung des Teilvolumenstroms unterbrochen oder das Entfernen der Ablagerungen in einem Zeitraum durchgeführt, in dem kein Teilvolumenstrom behandelt werden soll.

Nach der Plasmabehandlung wird die modifizierte Gaszusammensetzung ganz oder teilweise in den methanhaltigen Gasvolumenstrom zurückgeführt. Vorzugsweise werden mindestens 20 Vol.-%, besonders bevorzugt mindestens 60 Vol.-% und insbesondere mindestens 80 Vol.-% der modifizierten Gaszusammensetzung in den methanhaltigen Gasvolumenstrom zurückgeführt. Bevor die modifizierte Gaszusammensetzung in den methanhaltigen Gasvolumenstrom zurückgeführt wird können für einen Gastransport in einer Leitung störende Komponenten, wie Ruß oder höhere Kohlenwasserstoffe, durch geeignete Verfahren, wie Filtration, Kondensation oder Gaswäsche entfernt werden. Wenn der Druck des entnommenen Teilvolumenstroms vor oder während der Behandlung mit einem elektrisch erzeugten Plasma verringert wurde, wird die modifizierte Gaszusammensetzung vorzugsweise mit einem Verdichter auf einen höheren Druck gebracht, bevor sie in den methanhaltigen Gasvolumenstrom zurückgeführt wird.

Die durch Behandlung mit einem Plasma erzeugte modifizierte Gaszusammensetzung kann gelagert, gespeichert, insbesondere zwischengespeichert, umgeleitet und/oder nachbehandelt werden, bevor sie ganz oder teilweise in den methanhaltigen Gasvolumenstrom zurückgeführt wird.

Bevorzugt weist die modifizierte Gaszusammensetzung bei der Rückführung in den methanhaltigen Gasvolumenstrom einen ähnlichen Wobbe-Index auf wie der methanhaltige Gasvolumenstrom. Vorzugsweise liegt das Verhältnis des Wobbe-Index der modifizierten Gaszusammensetzung zum Wobbe-Index des methanhaltigen Gasvolumenstroms im Bereich von 0,7:1 bis 1:0,7, besonders bevorzugt im Bereich von 0,85:1 bis 1:0,85 und insbesondere im Bereich von 0,95:1 bis 1:0,95.

Ein ähnlicher Wobbe-Index von modifizierter Gaszusammensetzung und methanhaltigem Gasvolumenstrom kann durch einen geringen Umsatz von Methan bei der Plasmabehandlung erzielt werden. Um unabhängig vom Umsatz von Methan einen ähnlichen Wobbe-Index von modifizierter Gaszusammensetzung und methanhaltigem Gasvolumenstrom zu erzielen wird jedoch vorzugsweise der modifizierten Gaszusammensetzung vor der Rückführung ein zusätzliches Gas zugegeben, vorzugsweise ein Gas, das nicht brennbar ist oder einen geringeren Brennwert aufweist als der methanhaltige Gasvolumenstrom. Hierdurch kann im erfindungsgemäßen Verfahren sichergestellt werden, dass der im Vergleich zum entnommenen Teilvolumenstrom höhere Brennwert der modifizierten Gaszusammensetzung nicht zu einer starken Änderung des Wobbe-Index im methanhaltigen Gasvolumenstrom führt, was für den Endverbraucher aufgrund des engen akzeptablen Bereichs des Wobbe-Indexes der Endverbrauchergeräte zum Nachteil gereichen könnte. Zur Absenkung des Wobbe-Indexes auf den durch den Betreiber der Gasleitung vorgegebenen Wert wird vorzugsweise ein zusätzliches Gas zugegeben, das Sauerstoff, Stickstoff, Kohlendioxid, Kohlenmonoxid und/oder Wasserstoff enthält. Das zusätzliche Gas kann außerdem noch Wasserdampf enthalten, wobei der Gehalt an Wasserdampf so niedrig gehalten werden soll, dass nach der Rückführung der modifizierten Gaszusammensetzung in den methanhaltigen Gasvolumenstrom der angestrebte Taupunkt nicht überschritten wird.

Bevorzugt werden Sauerstoff und Stickstoff in Form von Luft zugegeben. Der bei einem hohen Methanumsatz zu hohe Wobbe-Index kann durch eine adäquate Zumischung von Luft auf den erforderlichen Wert abgesenkt werden. Bei einem entsprechend geringen Umsatz von Methan bei der Plasmabehandlung sind dazu so niedrige Luftmengen erforderlich, dass der in Erdgasleitungen zulässige Höchstwert von Sauerstoff (DVGW-Richtlinien: 4 %) nicht überschritten wird.

Wenn der methanhaltige Gasstrom ein Erdgas ist, kann als zusätzliches Gas auch Biogas zugegeben werden, das vorzugsweise nicht oder nur teilweise aufgereinigt wird und einen geringeren Wobbe-Index aufweist als das Erdgas.

In einer bevorzugten alternativen Ausführungsform kann auch Wasser zu Wasserstoff elektrolysiert werden, welcher anschließend zur Einstellung des Wobbe-Indexes als zusätzliches Gas der modifizierten Gaszusammensetzung, vorzugsweise einem Erdgas, zugegeben wird. Vorzugsweise werden sowohl für die Plasmabehandlung als auch für die Elektrolyse überschüssiger Strom verwendet, wobei die Verteilung des Stroms auf die Plasmabehandlung und die Elektrolyse so gewählt wird, dass der Wobbe-Index nach Zugabe des durch Elektrolyse erzeugten Wasserstoff dem Wobbe-Index in dem methanhaltigen Gasvolumenstrom entspricht. Im Gegensatz zur direkten Einmischung von reinem Wasserstoff in Erdgasleitungen, die bereits im Bereich von wenigen Prozent Volumenanteil des Wasserstoffs zu einer erheblichen Reduzierung des Wobbe-Indexes des Erdgases führen, können bei einer solchen Kopplung von Plasmabehandlung und Elektrolyse größere Mengen Wasserstoff bei Einhaltung eines vorgegebenen Wobbe-Index in eine Erdgasleitung eingespeist werden. Die Auslegung und der Betrieb der Kombination von Elektrolyse und Plasmabehandlung kann dabei einfach an die örtliche Erdgasqualität und selbst nach Inbetriebnahme an veränderliche Erdgasqualitäten angepasst werden. Hinzu kommt, dass ein Teil des "Überschussstroms" in die Anreicherung des Brennwerts von Erdgas geht, sodass die spezifisch teure Elektrolyse bei gleicher "Einspeicherleistung" kleiner gebaut werden kann als im Fall einer reinen Speicherung durch elektrolytisch erzeugten Wasserstoff.

In einer bevorzugten Ausführungsform des erfindungsgemäßen Verfahrens wird der Wobbe-Index der modifizierten Gaszusammensetzung kontinuierlich oder intermittierend gemessen und mit dem gemessenen Wert die Menge an zugegebenem zusätzlichen Gas geregelt. Geeignete Geräte zur kontinuierlichen oder intermittierenden Messung des Wobbe-Index einer Gasmischung sind kommerziell erhältlich, beispielsweise unter der Bezeichnung Kalorimeter CWD2005 von der Firma Union Instruments oder unter der Bezeichnung RHADOX™-Analysator von der Firma AMS Analysen-, Mess- und Systemtechnik.

Alternativ zur Zugabe des zusätzlichen Gases nach der Plasmabehandlung kann die Zugabe des zusätzlichen Gases auch vor oder während der Plasmabehandlung erfolgen. In einer bevorzugten Ausführungsform der Zugabe eines zusätzlichen Gases während der Plasmabehandlung wird in einem Wasserstoffstrom durch eine Bogenentladung ein Plasma erzeugt und der Teilvolumenstrom mit dem so erzeugten Plasma behandelt. Vorzugsweise wird dabei zur Erzeugung des Plasmas ein sogenanntes Plasmatron eingesetzt, wie es in Rutscher/Deutsch: Plasmatechnik - Grundlagen und Anwendungen - Eine Einführung, Lizenzausgabe für den Carl Hanser Verlag München Wien, VEB Fachbuchverlag Leipzig, 1984, Kapitel 1.2 "Erzeugung des Plasmazustandes", auf Seiten 241 bis 247 beschrieben ist. Der dazu eingesetzte Wasserstoffstrom wird vorzugsweise durch Elektrolyse von Wasser erzeugt.

In einer weiteren bevorzugten Ausführungsform wird aus der modifizierten Gaszusammensetzung mindestens eine Komponente selektiv abgetrennt. Vorzugsweise ist diese Komponente Wasserstoff, Kohlenmonoxid, Ethen, Propen oder Propan. Es können auch zwei oder mehr Komponenten separat oder gemeinsam abgetrennt werden. Das Abtrennen der Komponente kann mit allen dem Fachmann dazu bekannten Trennverfahren erfolgen und erfolgt vorzugsweise mit einem Membranverfahren. In diesem Zusammenhang ist festzustellen, dass keine vollständige Abtrennung erforderlich ist, sondern der Abtrennungsgrad anhand wirtschaftlicher Überlegungen optimiert werden kann. Beispielsweise kann Wasserstoff für Hydrierungen oder Ethen und/oder Propen für chemische Synthesen abgetrennt werden. In einer bevorzugten Ausführungsform des erfindungsgemäßen Verfahrens wird durch selektive Abtrennung von Wasserstoff aus der modifizierten Gaszusammensetzung ein Wasserstoffstrom erzeugt, in diesem Wasserstoffstrom durch eine Bogenentladung ein Plasma erzeugt und der Teilvolumenstrom mit dem so erzeugten Plasma behandelt. Vorzugsweise wird durch die selektive Abtrennung von Komponenten das Gasvolumen der modifizierten Gaszusammensetzung höchstens um 60 Vol.-%, besonders bevorzugt um höchstens 40 Vol.-% und insbesondere um höchstens 20 Vol.-% reduziert.

Wenn der methanhaltige Gasvolumenstrom ein Erdgas in einem Erdgasnetz ist, können alternativ diese Komponenten auch an beliebigen Entnahmestellen aus dem Erdgasnetz entnommen werden. So wäre es beispielsweise einfacher (insbesondere in kleineren Anlagen machbar), am Ort des Verbrauchs Wasserstoff aus dem Erdgasnetz abzutrennen als durch Reforming von Erdgas zu erzeugen. Alternativ könnten Ethan, Ethen, Propan und/oder Propen als Autogas isoliert werden. Bei den Entnahmen ist möglicherweise die Einhaltung des Wobbe-Indexes in der Erdgasleitung zu beachten. Bei der Abreicherung von Wasserstoff kann der Wobbe-Index des abgereicherten Gasgemisches ansteigen, wohingegen bei Entnahme von höheren Kohlenwasserstoffen der Wobbe-Index abfallen kann. Um den Wobbe-Index konstant zu halten, kann daher bei einer von der Plasmabehandlung entfernten Entnahmestelle vorgesehen sein, dass sowohl Wasserstoff als auch ein Wertstoff, wie beispielsweise Ethen oder Propen entnommen wird. Alternativ kann Wasserstoff entnommen und an der Entnahmestelle ein anderes Gas zugesetzt werden, das nicht brennbar ist, wie beispielsweise Stickstoff, oder einen niedrigeren Wobbe-Index als das Erdgas aufweist.

Mit dem erfindungsgemäßen Verfahren lässt sich überschüssige elektrische Energie, die vorzugsweise aus erneuerbaren Energien, wie beispielsweise Windkraft oder Photovoltaik stammt, in eine speicherbare Form überführen und beispielsweise in einer vorhandenen Infrastruktur zur Erdgasspeicherung speichern.

Das Verfahren besitzt einen hohen Wirkungsgrad und kann in standardisierten Kleinanlagen, z.B. in Form von Kompaktanlagen in Containerbauweise, dezentral betrieben werden. Vorzugsweise wird das Verfahren in einer Anlage in Containerbauweise mit integrierter Infrastruktur betrieben, wie sie in WO 2010/028869 beschrieben ist.

Darüber hinaus kann das Verfahren mit relativ wenigen Verfahrensschritten durchgeführt werden, die einfach und reproduzierbar sind. Dadurch kann das erfindungsgemäße Verfahren einfach und kostengünstig durchgeführt werden.

Weiterhin ist die Durchführung des Verfahrens nicht mit einer Gefährdung der Umwelt oder der Gesundheit von Menschen verbunden, so dass auf den Einsatz von gesundheitlich bedenklichen Stoffen oder Verbindungen, die mit Nachteilen für die Umwelt verbunden sein könnten, im Wesentlichen verzichtet werden kann. Das erfindungsgemäße Verfahren lässt sich sogar emissionsfrei betreiben.

Ferner kann der sogenannte Wobbe-Index in dem modifizierten methanhaltigen Gasvolumenstrom so eingestellt werden, dass er dem Wert in einer Standard-Erdgasleitung entspricht.

Zusätzlich können mit dem erfindungsgemäßen Verfahren wertvolle Chemikalien, die bei dem Verfahren als zusätzliche Nebenprodukte anfallen, zur Verfügung gestellt werden.

Das erfindungsgemäße Verfahren ist außerdem unabhängig von der lokalen Erdgasqualität, falls Erdgas als methanhaltiger Gasvolumenstrom eingesetzt wird.

Ferner kann durch die Verwendung von elektrischer Leistung, die nicht für andere Zwecke eingesetzt werden kann und z.B. aus erneuerbaren Energien stammt, der Brennwert von Erdgas durch die Erzeugung von Wasserstoff und Ethan aus Methan gesteigert werden, so dass weniger Gas zur Erzeugung einer bestimmten Energiemenge aus diesem Gas notwendig ist im Vergleich zu dem unbehandelten Erdgas. Hierdurch kann Erdgas eingespart werden.

Im Vergleich zu einer Kombination aus elektrolytischer Wasserstofferzeugung und Methanisierung sind die Investitionskosten bei dem erfindungsgemäßen Verfahren deutlich geringer.

Außerdem weist das erfindungsgemäße Verfahren deutlich geringere Wirkungsgradverluste auf als eine Methanisierung, bezogen auf die gleiche gespeicherte Energie. Dies gilt insbesondere dann, wenn das für die Methanisierung erforderliche Kohlendioxid nicht aus Rauchgasen oder Biogasanlagen in höherer Konzentration zur Verfügung steht, sondern aus der Luft gewonnen werden muss. Außerdem erfordert die Methanisierung hohe Temperaturen, wobei sich die bei der Methanisierung entstehende Abwärme nur aufwändig verwerten lässt, was meist unwirtschaftlich ist.

Die Plasmabehandlung des erfindungsgemäßen Verfahrens kann - anders als der Gasphasenprozess der Methanisierung - vergleichsweise gut dynamisch betrieben werden, lässt sich also flexibel und variabel auf das Stromangebot hin anpassen. Bei einer Kopplung des erfindungsgemäßen Verfahrens mit einer Elektrolyse von Wasserstoff erfolgt die Erzeugung von Kohlenwasserstoff-Wasserstoffgemischen mit höherem Brennwert und Wobbe-Index zeitgleich mit dem Anfall von ElektrolyseWasserstoff. Eine Zwischenspeicherung des Wasserstoffs ist daher nicht erforderlich. Im Gegensatz hierzu ist im Fall der Methanisierung, die man für einen wirtschaftlichen Betrieb der Anlage bevorzugt kontinuierlich, also zeitlich entkoppelt von der Elektrolyse, durchführt, eine Möglichkeit zur Zwischenspeicherung von Wasserstoff erforderlich, die in der Regel auch einen zusätzlichen apparativen und energetischen Aufwand zur Verdichtung des Wasserstoffs erfordert.

Sowohl für die Elektrolyse als auch für die Plasmabehandlung ist der spezifische Kapitalbedarf geringer als bei der Hochtemperatur-Methanisierung. Folglich sind kleine dezentrale Einheiten, z.B. Containereinheiten, mit hohem Standardisierungspotenzial einfacher wirtschaftlich darstellbar.

Weitere Vorteile gegenüber der Variante der Methanisierung von Wasserstoff sind eine mögliche Reduktion von Emissionen, da ein Wasserstoffanteil in dem methanhaltigen Gasvolumenstrom zu einer Verringerung von NOₓ-Emissionen bei einer Verbrennung führt.

Durch den Einsatz von Biogas als methanhaltigem Gasvolumenstrom oder die Zugabe von Biogas als zusätzlichem Gas lässt sich die Aufbereitung von Biogas auf die erforderliche Einspeisequalität vereinfachen. Biogas kann auf dem Wege der Plasmabehandlung direkt oder in Kombination mit Erdgas, das am Ort der geplanten Einspeisung vorliegt, derart angereichert werden, dass sich eine Aufarbeitung durch absorptive, adsorptive und/oder Membranverfahren vor einer Einspeisung ins Erdgasnetz erübrigt oder sich der Aufarbeitungsaufwand zumindest deutlich verringert.

## Patentansprüche

1. Verfahren zur Modifizierung eines methanhaltigen Gasvolumenstroms, umfassend die Schritte:
i) Entnahme eines Teilvolumenstroms aus einem methanhaltigen Gasvolumenstrom,
ii) Behandlung des Teilvolumenstroms mit einem elektrisch erzeugten Plasma unter Erzeugung einer modifizierten Gaszusammensetzung, die einen geringeren Anteil an Methan umfasst als der methanhaltige Gasvolumenstrom und
iii) Rückführung von modifizierter Gaszusammensetzung in den methanhaltigen Gasvolumenstrom.

2. Verfahren nach Anspruch 1, **dadurch gekennzeichnet, dass** der methanhaltige Gasvolumenstrom ein Erdgas oder ein Biogas ist.

3. Verfahren nach Anspruch 1 oder 2, **dadurch gekennzeichnet, dass** die modifizierte Gaszusammensetzung einen höheren Gehalt an Wasserstoff und Ethan aufweist als der entnommene Teilvolumenstrom.

4. Verfahren nach einem der vorangehenden Ansprüche, **dadurch gekennzeichnet, dass** die modifizierte Gaszusammensetzung einen höheren Gehalt an Propan, Ethen und/oder Propen aufweist als der entnommene Teilvolumenstrom.

5. Verfahren nach einem der vorangehenden Ansprüche, **dadurch gekennzeichnet, dass** der modifizierten Gaszusammensetzung vor der Rückführung ein zusätzliches Gas zugegeben wird.

6. Verfahren nach Anspruch 5, **dadurch gekennzeichnet, dass** das zusätzliche Gas Sauerstoff, Stickstoff, Kohlendioxid, Kohlenmonoxid und/oder Wasserstoff enthält.

7. Verfahren nach Anspruch 5 oder 6, **dadurch gekennzeichnet, dass** das zusätzliche Gas Luft enthält.

8. Verfahren nach Anspruch 5 oder 6, **dadurch gekennzeichnet, dass** das zusätzliche Gas Wasserstoff aus einer Elektrolyse von Wasser enthält.

9. Verfahren nach Anspruch 5 oder 6, **dadurch gekennzeichnet, dass** der methanhaltige Gasvolumenstrom ein Erdgas und das zusätzliche Gas ein Biogas ist.

10. Verfahren nach einem der Ansprüche 5 bis 9, **dadurch gekennzeichnet, dass** der Wobbe-Index der modifizierten Gaszusammensetzung kontinuierlich oder intermittierend gemessen wird und mit dem gemessenen Wert die Menge an zugegebenem zusätzlichem Gas geregelt wird.

11. Verfahren nach einem der vorangehenden Ansprüche, **dadurch gekennzeichnet, dass** das Verhältnis des Wobbe-Index der modifizierten Gaszusammensetzung zum Wobbe-Index des methanhaltigen Gasvolumenstroms im Bereich von 0,85:1 bis 1:0,85 liegt.

12. Verfahren nach einem der vorangehenden Ansprüche, **dadurch gekennzeichnet, dass** vor der Rückführung aus der modifizierten Gaszusammensetzung mindestens eine Komponente selektiv abgetrennt wird.

13. Verfahren nach Anspruch 12, **dadurch gekennzeichnet, dass** Wasserstoff, Kohlenmonoxid, Ethen, Propen und/oder Propan selektiv abgetrennt wird.

14. Verfahren nach einem der vorangehenden Ansprüche, **dadurch gekennzeichnet, dass** das Plasma mit Strom aus erneuerbaren Energien erzeugt wird.

15. Verfahren nach einem der vorangehenden Ansprüche, **dadurch gekennzeichnet, dass** die Behandlung mit dem Plasma in Abhängigkeit des Stromangebots erfolgt.

## Claims

1. Method for modification of a methane-containing gas stream, comprising the steps:
i) withdrawal of a substream from a methane-containing gas stream,
ii) treatment of the substream with an electrically generated plasma, generating a modified gas composition which comprises a lower fraction of methane than the methane-containing gas stream and
iii) return of modified gas composition into the methane-containing gas stream.

2. Method according to Claim 1, **characterized in that** the methane-containing gas stream is a natural gas or a biogas.

3. Method according to Claim 1 or 2, **characterized in that** the modified gas composition has a higher content of hydrogen and ethane than the substream that is withdrawn.

4. Method according to any one of the preceding claims, **characterized in that** the modified gas composition has a higher content of propane, ethene and/or propene than the substream that is withdrawn.

5. Method according to any one of the preceding claims, **characterized in that** an additional gas is added to the modified gas composition before it is returned.

6. Method according to Claim 5, **characterized in that** the additional gas contains oxygen, nitrogen, carbon dioxide, carbon monoxide and/or hydrogen.

7. Method according to Claim 5 or 6, **characterized in that** the additional gas contains air.

8. Method according to Claim 5 or 6, **characterized in that** the additional gas contains hydrogen from an electrolysis of water.

9. Method according to Claim 5 or 6, **characterized in that** the methane-containing gas stream is a natural gas and the additional gas is a biogas.

10. Method according to any one of Claims 5 to 9, **characterized in that** the Wobbe index of the modified gas composition is measured continuously or intermittently and the amount of added additional gas is controlled by the measured value.

11. Method according to any one of the preceding claims, **characterized in that** the ratio of the Wobbe index of the modified gas composition to the Wobbe index of the methane-containing gas stream is in the range from 0.85:1 to 1:0.85.

12. Method according to any one of the preceding claims, **characterized in that** at least one component is selectively separated from the modified gas composition before it is returned.

13. Method according to Claim 12, **characterized in that** hydrogen, carbon monoxide, ethene, propene and/or propane is selectively separated.

14. Method according to any one of the preceding claims, **characterized in that** the plasma is generated by power from renewable energies.

15. Method according to any one of the preceding claims, **characterized in that** the treatment with the plasma proceeds in dependence on the power supply.

## Revendications

1. Procédé pour la modification d'un flux volumique gazeux contenant du méthane comprenant les étapes :
i) prélèvement d'un flux volumique partiel d'un flux volumique gazeux contenant du méthane,
ii) traitement du flux volumique partiel avec un plasma produit de manière électrique avec production d'une composition de gaz modifié qui comprend une proportion réduite de méthane par rapport au flux volumique gazeux contenant du méthane et
iii) recyclage de la composition de gaz modifié dans le flux volumique gazeux contenant du méthane.

2. Procédé selon la revendication 1, **caractérisé en ce que** le flux volumique gazeux contenant du méthane est un gaz naturel ou un biogaz.

3. Procédé selon la revendication 1 ou 2, **caractérisé en ce que** la composition de gaz modifié présente une teneur en hydrogène et en éthane plus élevée que le flux volumique partiel prélevé.

4. Procédé selon l'une quelconque des revendications précédentes, **caractérisé en ce que** la composition de gaz modifié présente une teneur en propane, en éthène et/ou en propène plus élevée que le flux volumique partiel prélevé.

5. Procédé selon l'une quelconque des revendications précédentes, **caractérisé en ce qu'**un gaz supplémentaire est ajouté à la composition de gaz modifié avant le recyclage.

6. Procédé selon la revendication 5, **caractérisé en ce que** le gaz supplémentaire contient de l'oxygène, de l'azote, du dioxyde de carbone, du monoxyde de carbone et/ou de l'hydrogène.

7. Procédé selon la revendication 5 ou 6, **caractérisé en ce que** le gaz supplémentaire contient de l'air.

8. Procédé selon la revendication 5 ou 6, **caractérisé en ce que** le gaz supplémentaire contient de l'hydrogène provenant d'une électrolyse de l'eau.

9. Procédé selon la revendication 5 ou 6, **caractérisé en ce que** le flux volumique gazeux contenant du méthane est un gaz naturel et le gaz supplémentaire est un biogaz.

10. Procédé selon l'une quelconque des revendications 5 à 9, **caractérisé en ce que** l'indice de Wobbe de la composition de gaz modifié est mesuré en continu ou par intermittence et la quantité de gaz supplémentaire ajouté est réglée avec la valeur mesurée.

11. Procédé selon l'une quelconque des revendications précédentes, **caractérisé en ce que** le rapport de l'indice de Wobbe de la composition de gaz modifié sur l'indice de Wobbe du flux volumique gazeux contenant du méthane se situe dans la plage de 0,85 : 1 à 1 : 0,85.

12. Procédé selon l'une quelconque des revendications précédentes, **caractérisé en ce qu'**au moins un composant est séparé de manière sélective de la composition de gaz modifié avant le recyclage.

13. Procédé selon la revendication 12, **caractérisé en ce que** de l'hydrogène, du monoxyde de carbone, de l'éthène, du propène et/ou du propane est séparé de manière sélective.

14. Procédé selon l'une quelconque des revendications précédentes, **caractérisé en ce que** le plasma est produit avec de l'électricité provenant d'énergies renouvelables.

15. Procédé selon l'une quelconque des revendications précédentes, **caractérisé en ce que** le traitement avec le plasma est réalisé en fonction de l'approvisionnement en électricité.
